# EUROPÄISCHE PATENTSCHRIFT

(11) **EP 4 308 394 B1**
(45) Veröffentlichungstag und Bekanntmachung des Hinweises auf die Patenterteilung: **08.07.2026**
(21) Anmeldenummer: 22709713.6
(22) Anmeldetag: 01.03.2022
(51) Int. Cl.: B60J 7/16

(54) **HUBDACH FÜR EIN FAHRZEUG, INSBESONDERE HUBDACH FÜR EINEN KASTENWAGEN, EIN WOHNMOBIL ODER EINEN WOHNWAGEN, UND VERFAHREN ZUR HERSTELLUNG EINES SOLCHEN**
LIFTING ROOF FOR A VEHICLE, IN PARTICULAR A LIFTING ROOF FOR A PANEL VAN, A MOBILE HOME OR A CARAVAN, AND METHOD FOR PRODUCTION THEREOF
TOIT RELEVABLE POUR UN VÉHICULE, EN PARTICULIER UN TOIT RELEVABLE POUR UN FOURGON, UNE MAISON MOBILE OU UNE CARAVANE, ET SON PROCÉDÉ DE PRODUCTION

(30) Priorität: 18.03.2021 DE 102021106725
(43) Veröffentlichungstag der Anmeldung: 24.01.2024
(73) Patentinhaber: C.F. Maier GmbH & Co. Kg, 89551 Koenigsbronn (DE)
(72) Erfinder: SAUTER, Erich, 87600 Kaufbeuren (DE)
(74) Vertreter: Witte, Weller & Partner Patentanwälte mbB
(86) Internationale Anmeldenummer: PCT/EP2022/055172
(87) Internationale Veröffentlichungsnummer: WO 2022/194542

(56) Entgegenhaltungen:
- EP-A1- 2 186 667
- FR-A1- 2 554 062
- KR-A- 20180 077 915
- US-A- 4 362 258
- US-A- 6 149 225

## Beschreibung

Die Erfindung betrifft ein Fahrzeugdach in Form eines Hubdaches, insbesondere für einen Kastenwagen, ein Wohnmobil oder einen Wohnwagen. Es gibt Hubdächer, die zum nachträglichen Einbau etwa in einen Kastenwagen bestimmt sind. Derartige Hubdächer sind immer mittels Scharnieren an einem umlaufenden Einbaurahmen befestigt, der bei einem nachträglichen Einbau an einer Öffnung befestigt wird, die durch Aufschneiden des Daches erzeugt wird. Es versteht sich, dass ferner zumindest ein Verschluss vorgesehen sein muss, um das Hubdach sicher verschließen und am Einbaurahmen festlegen zu können.

Derartige Hubdächer werden typischerweise in Sandwich-Bauweise hergestellt, um eine hohe Stabilität in Kombination mit guten Dämmungseigenschaften zu erzielen. Allerdings ist der Aufbau relativ aufwendig und teuer. Außerdem sind derartige Konstruktionen wenig flexibel und lassen sich nur schwer recyclen.

Die US 6 149 225 A, welche die Grundlage für den Oberbegriff des Anspruchs 1 bildet, offenbart ein Pop-up-Wohnmobil mit einem Dach über einer Karosserie und einem Hebesystem, das an mehreren Befestigungspositionen am Dach befestigt ist. Das Hebesystem umfasst eine Vielzahl von einziehbaren Pfosten, die dazu ausgebildet sind, sich in eine Richtung entlang ihrer axialen Mitten ausfahren zu lassen, sodass, wenn die Pfosten in einer ausgefahrenen Position sind, diese das Dach über der Karosserie stützen.

Die US 4 362 258 A zeigt eine Dachaufsatzbaugruppe zum Umbau eines Lieferwagens in ein Wohnmobil, die als Einheit installiert werden kann und eine Befestigungsbasis aufweist.

Die FR 2 554 062 A1 zeigt ein Dach eines Fahrzeuges mit einer Abdeckung, die zwischen einer niedrigen Position und einer hohen Position über einer in dem Dach angeordneten Öffnung bewegt werden kann.

Vor diesem Hintergrund liegt der Erfindung die Aufgabe zugrunde, ein verbessertes Hubdach für ein Fahrzeug zu schaffen, das möglichst einfach und kostengünstig herstellbar ist, ein vereinfachtes Recycling ermöglicht und möglichst eine größere Variabilität bei der Herstellung erlaubt. Ferner soll ein geeignetes Verfahren zur Herstellung eine solchen Daches angegeben werden.

Diese Aufgabe wird durch ein Hubdach für ein Fahrzeug gelöst, insbesondere für einen Kastenwagen, ein Wohnmobil oder einen Wohnwagen, mit einer Außenschale und einer Innenschale, die miteinander verklebt sind, wobei die Außenschale und die Innenschale aus Kunststoff bestehen, wobei zusätzlich Metallteile zur Aufnahme von Funktionselementen vorgesehen sind, die zumindest eine aus Metall bestehende Aufnahme zur Befestigung von Scharnieren umfassen, wobei die Metallteile zumindest in eine der Außenschale und der Innenschale eingeschäumt oder einlaminiert sind.

Die Aufgabe der Erfindung wird ferner durch ein Verfahren zur Herstellung eines Hubdaches für ein Fahrzeug gelöst, insbesondere für einen Kastenwagen, ein Wohnmobil oder einen Wohnwagen, bei dem eine Außenschale und einen Innenschale aus Kunststoff hergestellt werden, die zueinander positioniert werden und miteinander verklebt werden, wobei ferner Metallteile zumindest zur Aufnahme von Scharnieren eingebracht werden, wobei die Metallteile bei der Herstellung von Außenschale oder Innenschale zumindest in eine der Außenschale und der Innenschale eingeschäumt oder einlaminiert werden.

Die Aufgabe der Erfindung wird auf diese Weise vollkommen gelöst.

Dadurch, dass das Fahrzeugdach nunmehr durch Verklebung einer Außenschale und einer Innenschale miteinander hergestellt wird, ergibt sich eine deutlich erhöhte Flexibilität bei der Gestaltung des Daches. Während z.B. die Kontur des Außendaches beibehalten werden kann, können die Dacheigenschaften durch Abwandlung der Ausgestaltung des Innendaches an verschiedene Anforderungen angepasst werden. Da zumindest eine aus Metall bestehende Aufnahme zur Befestigung von Scharnieren vorgesehen ist, kann das Hubdach damit unmittelbar am Fahrzeug eingebaut werden.

Eine Herstellung eines Fahrzeugdaches durch Verklebung einer Außenschale und einer Innenschale ist grundsätzlich bekannt (vgl. DE 102013107203 A1, DE 10141243 A1). Allerdings ist hierdurch die Erfindung nicht nahegelegt, da es sich nicht um ein Hubdach handelt, bei dem besondere Metallteile zur Befestigung, wie etwa Scharniere vorgesehen sein müssen.

Das erfindungsgemäß hergestellte Dach lässt sich auch deutlich einfacher recyceln, wenn Außendach und Innendach wieder voneinander getrennt werden.

Das erfindungsgemäß hergestellte Dach ist außerdem leichter als ein konventionell hergestelltes Dach, das in Sandwich-Bauweise hergestellt ist.

Des Weiteren kann zumindest ein aus Metall bestehender Verschluss zur Sicherung des Fahrzeugdaches an einem Einbaurahmen vorgesehen sein.

Indem die notwendigen Metallteile zur Befestigung und Sicherung des Daches sogleich mit eingebaut werden, ergibt sich eine vereinfachte und kostengünstige Konstruktion.

Gemäß einer weiteren Ausgestaltung der Erfindung weist die Innenschale eine Mehrzahl von plastisch zur Innenseite hin vorstehenden Elementen auf, vorzugsweise mit mindestens zwei in Längsrichtung des Daches verlaufenden Längsstreben und mindestens zwei in Querrichtung des Daches verlaufenden Querstreben.

Auf diese Weise wird die Festigkeit des Daches erhöht. Gleichzeitig können durch die Längs- und Querstreben Hohlräume erzeugt werden, die für Einbauten nutzbar sind.

Gemäß einer weiteren Ausgestaltung der Erfindung sind zumindest einige der Elemente als Versteifungselemente ausgebildet.

Auf diese Weise kann die Festigkeit des Daches bei verringertem Gewicht gesteigert werden.

Gemäß einer weiteren Ausgestaltung der Erfindung ist zwischen der Außenschale und der Innenschale zumindest ein Hohlraum gebildet, der für Einbauten nutzbar ist, insbesondere für Kabel, Lüftung und Klimatisierung, Beleuchtung, Lautsprecher, Dachhimmel, elektrische Anschlüsse, Glasdächer usw.

Durch die neuartige Dachkonstruktion kann auf diese Weise eine deutlich verbesserte Funktionalität des Daches auf einfache Weise erzielt werden.

Gemäß einer weiteren Ausgestaltung der Erfindung sind auf der Außenseite der Außenschale Photovoltaikelemente vorgesehen, die mit Akkumulatoren gekoppelt sein können, die in einem zwischen Außenschale und Innenschale gebildeten Hohlraum aufgenommen sind.

Auf diese Weise kann eine selbstständige Stromversorgung des Fahrzeugdaches realisiert werden.

Gemäß einer weiteren Ausgestaltung der Erfindung weist die Innenschale randseitig eine Mehrzahl von Laschen auf, die zur Verklebung mit der Außenschale ausgebildet sind. Insbesondere sind die Laschen in ihrer Form an die Kontur der Außenschale angepasst, so dass bereits mit einer nur dünnen Klebeschicht eine sehr sichere und dauerhafte Verklebung zwischen der Außenschale und der Innenschale im Bereich der Laschen sichergestellt ist.

Auf diese Weise ergibt sich eine günstige Verklebung und somit eine gute Haftung zwischen Innenschale und Außenschale. Außerdem wird ein Recycling erleichtert, da eine spätere Trennung von Außenschale und Innenschale an den so vorgegebenen Flächen erleichtert wird.

Bei dem erfindungsgemäßen Herstellverfahren zur Herstellung eines Hubdaches werden die Metallteile bei der Herstellung von Außenschale oder Innenschale zumindest mit einer der Schalen stoffschlüssig verbunden, insbesondere eingeschäumt oder einlaminiert.

Auf diese Weise wird eine besonders gute Haftung zwischen den einzubringenden Metallteilen und der Außenschale bzw. der Innenschale gewährleistet. Hierzu müssen die Metallteile nur in geeigneter Weise fixiert werden, bevor der Schäum- bzw. Laminierprozess durchgeführt wird.

Gemäß einer weiteren Ausgestaltung der Erfindung werden die Metallteile mit der Außenschale und/oder der Innenschale verklebt.

Auf diese Weise können einzelne Metallteile auch nach der Herstellung von Innenschale oder Außenschale integriert werden.

In weiterer vorteilhafter Ausgestaltung des erfindungsgemäßen Verfahrens wird zwischen Außenschale und Innenschale zumindest ein Hohlraum erzeugt, der für Einbauten nutzbar ist, insbesondere für Kabel, Lüftung und Klimatisierung, Lautsprecher, Beleuchtung, Dachhimmel, elektrische Anschlüsse, Glasdächer usw.

Auf diese Weise können diverse Einbauten auf einfache Weise in das Dach integriert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Figur 1: ein erfindungsgemäßes Hubdach, das auf einen zugehörigen Einbaurahmen aufgesetzt ist, in perspektivischer Darstellung von außen;
- Figur 2: das Hubdach gemäß Fig. 1 von schräg unten gesehen;
- Figur 3: das Hubdach gemäß Fig. 2 in einer senkrechten Ansicht von unten;
- Figur 4: die Innenschale des Hubdaches in perspektivischer Darstellung von der Unterseite her gesehen, ohne die Außenschale;
- Figur 5: die Innenschale gemäß Fig. 4, jedoch von der Oberseite aus gesehen;
- Figur 6: einen Längsschnitt durch das Hubdach gemäß Fig. 1;
- Figur 7: einen Querschnitt durch das Hubdach gemäß Fig. 1; und
- Figur 8: beispielhaft ein Fahrzeug in Form eines Kastenwagens, auf dessen Dach ein erfindungsgemäßes Hubdach eingebaut ist.

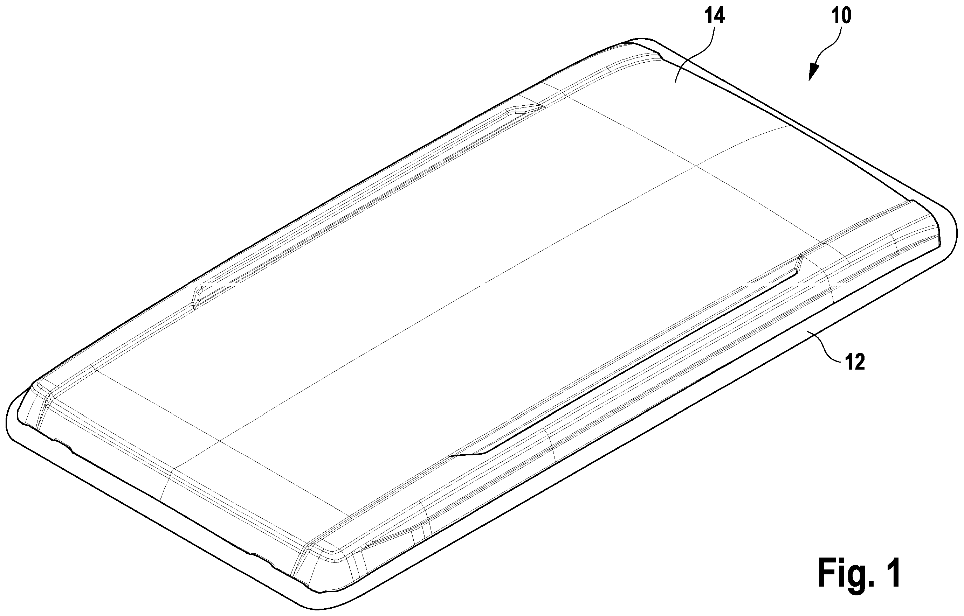

In Fig. 1 ist ein erfindungsgemäßes Hubdach in perspektivischer Darstellung gezeigt und insgesamt mit der Ziffer 10 bezeichnet. Das gesamte Hubdach 10 ist auf einem Einbaurahmen 12 (im Stand der Technik teilweise auch als Plattform bekannt) aufliegend dargestellt.

Der Einbaurahmen 12 dient zum nachträglichen Einbau des Hubdaches 10 in ein Fahrzeug, z.B. in einen Kastenwagen. Hierzu wird eine Ausnehmung geeigneter Größe in das Dach geschnitten und hierauf der Einbaurahmen 12 befestigt. Dabei kann das Hubdach 10 bereits als komplette Einbaueinheit zusammen mit dem Einbaurahmen 12 ausgebildet sein, um so eine besonders einfache Montage des Hubdaches an einem bestimmten Fahrzeug zu ermöglichen. Das Hubdach 10 ist in der Regel aufklappbar und weist eine Liegefläche auf, die ausgeklappt werden kann.

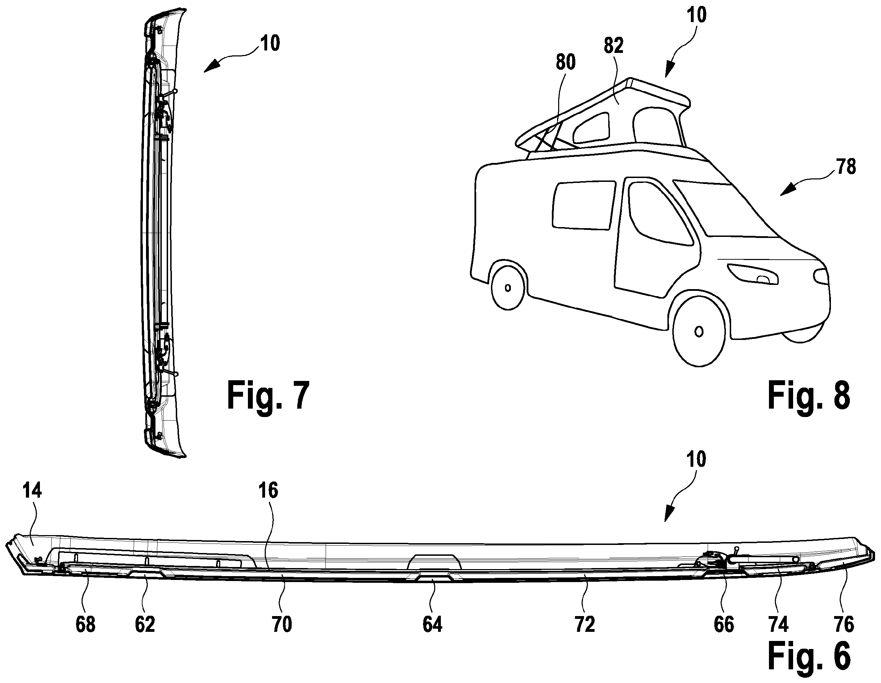

Hierzu ist beispielhaft in Figur 8 ein Fahrzeug 78 in Form eines Kastenwagens dargestellt. Das Dach wurde aufgeschnitten und ein Einbaurahmen 12 eingebaut. Daran ist ein erfindungsgemäßes Hubdach 10 befestigt, das in Fig. 8 in aufgeklappter Form dargestellt ist. Es wird an einem Ende von Scharnierscheren 80 am Einbaurahmen 12 gehalten. Ferner ist in Fig. 8 ein Stoffbalg oder Unterbau 82 erkennbar, der am Hubdach 10 gehalten ist und eine Liegefläche mit Matratze beinhaltet.

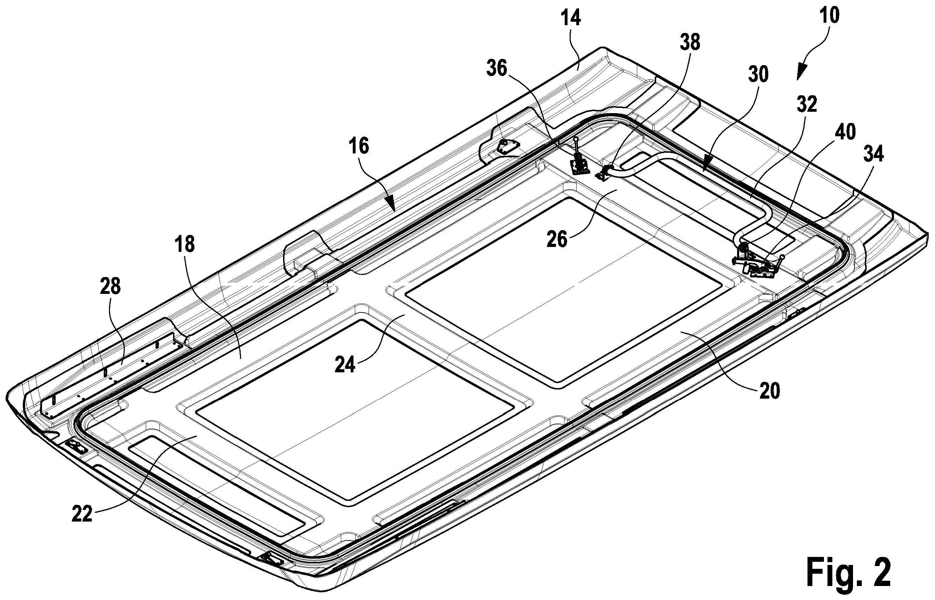

Das erfindungsgemäße Hubdach 10 ist zweischalig aufgebaut, mit einer Außenschale 14, die in Fig. 1 zu sehen ist, und mit einer Innenschale 16, die in Fig. 2 zu erkennen ist. Die Außenschale 14 und die Innenschale 16 sind miteinander verklebt. Die Außenschale 14 und die Innenschale 16 bestehen aus Kunststoff, z.B. aus Polypropylen. Zusätzlich sind am Hubdach 10 eine Reihe von Metallteilen aufgenommen, die für die Funktionsweise des Hubdaches 10 erforderlich sind.

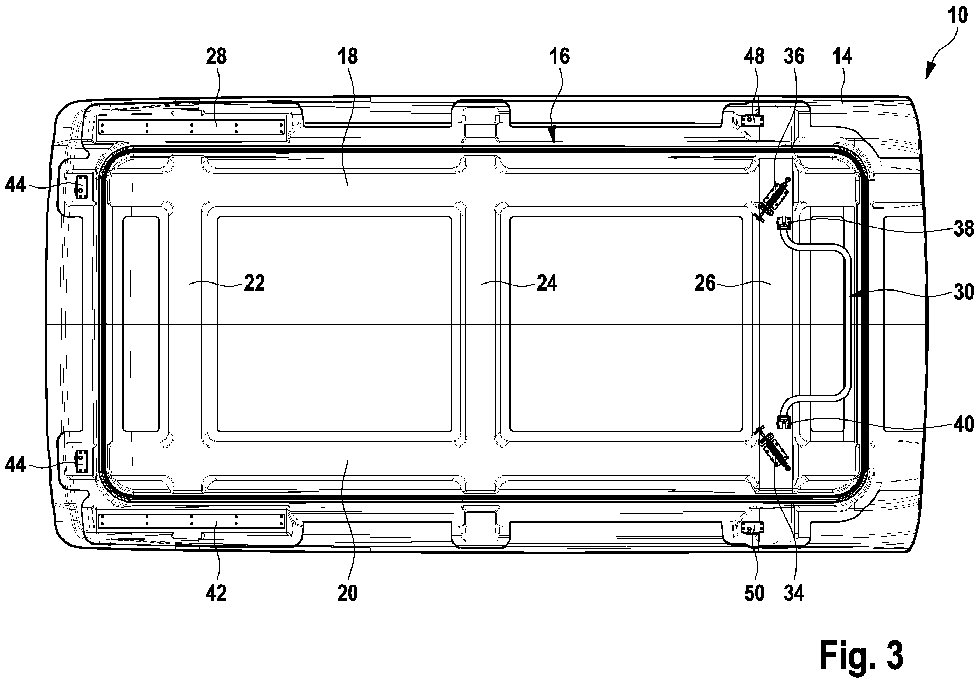

Beispielhaft sind in Fig. 2 und in Fig. 3 zwei Scharnieraufnahmen 28, 42 am einen Ende der Innenschale 16 aufgenommen, die zur Befestigung von Scharnierscheren 80 (vgl. Fig. 8) dienen, die mit dem Einbaurahmen 12 verbunden sind. Mit derartigen Scharnierscheren 80 wird ein Aufklappen des Daches nach außen ermöglicht. Zusätzlich sind in der Regel Gasdruckfedern vorgesehen, welche gleichfalls an Metall-Einbauteilen angelenkt sind.

Es versteht sich, dass das Hubdach 10, wenn es sich in seiner eingeklappten Stellung befindet, für die Fahrt sicher am Einbaurahmen 12 fixiert werden muss.

Hierzu ist beispielhaft ein Verschluss 30 in Form eines Zuziehgriffs an der den beiden Scharnieraufnahmen 28, 42 gegenüberliegenden Seite des Hubdaches 10 in den Fig. 2 bis 4 erkennbar. Der Verschluss 30 weist einen Verschlusshebel 32 in Form einer Haltestange auf, der schwenkbar an zwei Aufnahmen 38, 40 gelagert ist und der an einem Ende mit einer Verriegelung 34 gekoppelt ist. Am anderen Ende ist zusätzlich eine weitere Verriegelung 36 vorgesehen.

Das Hubdach 10 lässt sich in seiner geschlossenen Position auf diese Weise mittels des Verschlusses 30 sicher am Einbaurahmen 12 befestigen.

Bei der Herstellung des Hubdaches 10 werden sämtliche notwendigen Einbauteile aus Metall, die für den späteren Aufbau des Hubdaches 10 notwendig sind, mit integriert.

In den Figuren sind hierzu beispielhaft neben den Scharnieraufnahmen 28, 42 vier Beschläge 44, 46, 48, 50 jeweils im Eckbereich vorgesehen. Diese Beschläge dienen beispielsweise zur Aufnahme von Kugelkopfgelenken oder Gasdruckfedern (nicht dargestellt) oder einer Liegeeinrichtung mit Matratze, die ausgeklappt werden kann (nicht dargestellt). Ferner könnte hieran beispielsweise ein Dachhimmel befestigt sein.

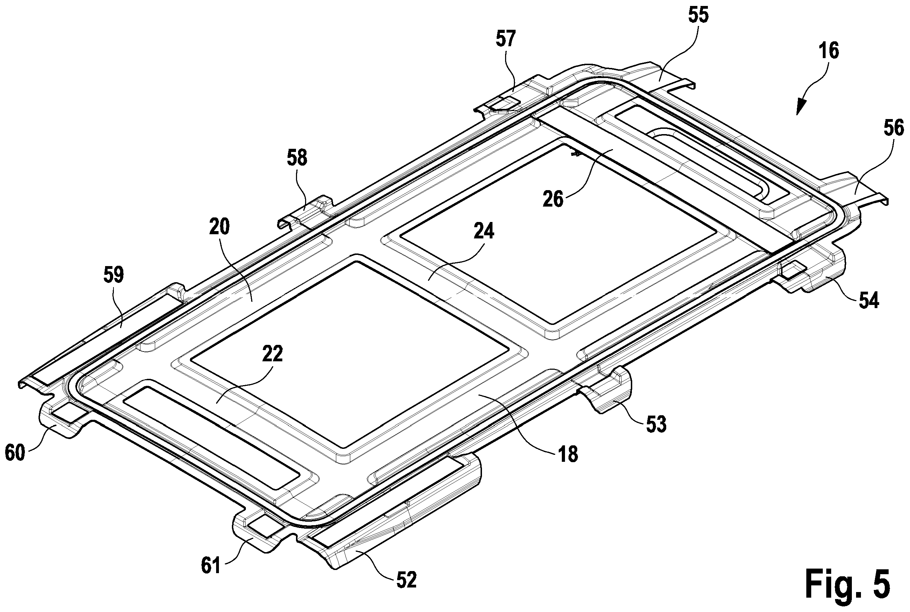

Wie aus den Fig. 2 bis 5 erkennbar ist, sind zwischen Außenschale 14 und Innenschale 16 insgesamt zwei Längsstreben 18 und drei Querstreben 22, 24, 26 gebildet. Durch diese plastisch zur Innenseite des Daches hin vorstehenden Streben ergibt sich eine deutliche Festigkeitserhöhung. Ferner können die hierunter gebildeten Hohlräume für Einbauten genutzt werden. So können hierin beispielsweise Kabel verlegt werden, Lüftungs- und Klimatisierungselemente eingebracht werden, Lautsprecher befestigt werden, Beleuchtungselemente, z.B. LEDs oder Lichtbänder, befestigt werden, ein Dachhimmel befestigt werden, elektrische Anschlüsse, wie z.B. USB-Anschlüsse usw. Ferner kann in den Zwischenräumen zwischen den Längsstreben 18, 20 und den Querstreben 22, 24, 26 ein Glasdach aufgenommen werden.

Hohlräume, die zwischen Außenschale 14 und Innenschale 16 gebildet werden, können für zahlreiche Einbauteile genutzt werden.

In der Schnittdarstellung gemäß Fig. 6 sind beispielhaft einige Hohlräume 62, 64, 66, 68, 70, 72, 74, 76 dargestellt.

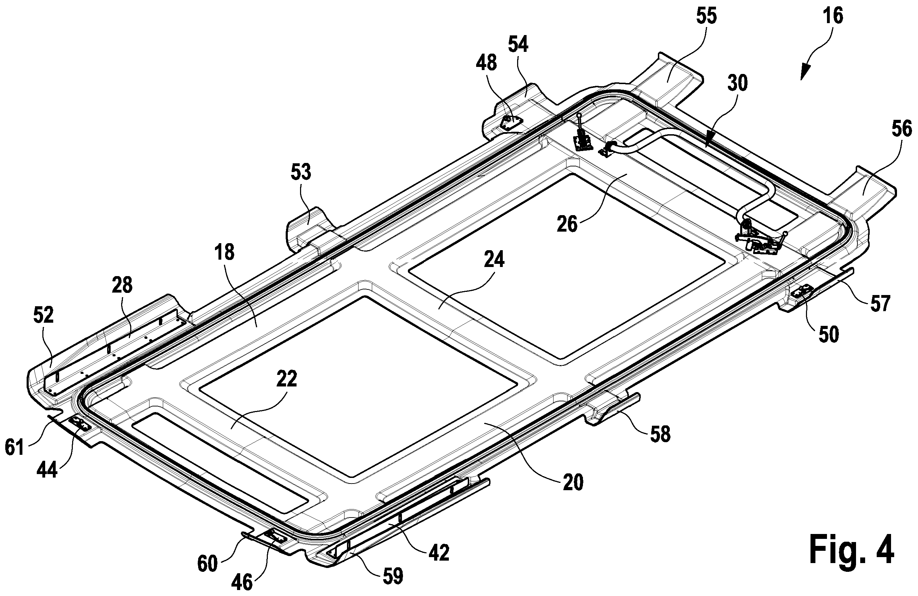

Aus der Untersicht der Innenschale 16 gemäß Fig. 4 ist ferner zu ersehen, dass die Innenschale 16 randseitig mit einer Mehrzahl von Laschen versehen ist, die einer flächigen Auflage an der Außenschale 14 dienen, wodurch so eine Klebeverbindung an gezielten Stellen erzeugt werden kann. Diese randseitigen Laschen sind in Fig. 4 mit 52, 53, 54, 55, 56, 57, 58, 59, 60, 61 bezeichnet.

Dadurch, dass die Klebeverbindungen insbesondere auf die durch die Laschen 52 bis 60 vorgegebenen Bereiche und ggf. die Bereiche der Längsstreben 18, 20 und Querstreben 22, 24, 26 beschränkt sind, wird ein Recycling erleichtert, da sich bei einer Wiederaufarbeitung Innenschale 16 und Außenschale 14 gezielt an diesen Punkten voneinander trennen lassen.

Die notwendigen Metallteile und Beschläge werden bei der Herstellung von Innenschale 16 bzw. Außenschale 14 gleich durch Einschäumen bzw. Laminieren entweder an der Außenschale oder der Innenschale fixiert. Vorzugsweise werden hierzu die notwendigen Metallteile an der Innenschale befestigt. Dagegen kann die Außenschale 16 für einen bestimmten Fahrzeugtyp dann eine einheitliche Form aufweisen, während an der Innenschale 16 je nach Ausführung unterschiedliche Metallteile mit eingeschäumt bzw. einlaminiert werden.

## Patentansprüche

1. Hubdach (10) für ein Fahrzeug (78), insbesondere für einen Kastenwagen, ein Wohnmobil oder einen Wohnwagen, mit einer Außenschale (14) und einer Innenschale (16), die miteinander verklebt sind, wobei die Außenschale (14) und die Innenschale (16) aus Kunststoff bestehen, wobei zusätzlich Metallteile (28, 30, 32, 34, 36, 38, 40, 42, 44, 46, 48, 50) zur Aufnahme von Funktionselementen vorgesehen sind, die zumindest eine aus Metall bestehende Aufnahme (28, 42) zur Befestigung von Scharnieren (80) umfassen, wobei die Metallteile (28, 38, 40, 42, 44, 46, 48, 50) zumindest in eine der Außenschale (14) und der Innenschale (16) eingeschäumt oder einlaminiert sind.

2. Hubdach (10) nach Anspruch 1, bei dem zumindest ein aus Metall bestehender Verschluss (30) zur Sicherung des Hubdaches (10) an einem Einbaurahmen vorgesehen ist.

3. Hubdach (10) nach einem der vorhergehenden Ansprüche, bei dem die Innenschale (16) eine Mehrzahl von plastisch zur Innenseite hin vorstehenden Elementen (18, 20, 22, 24, 26) aufweist, vorzugsweise mit mindestens zwei in Längsrichtung des Daches verlaufenden Längsstreben (18, 20) und mindestens zwei in Querrichtung des Daches verlaufenden Querstreben (22, 24, 26).

4. Hubdach (10) nach Anspruch 3, bei dem zumindest einige der Elemente (18, 20, 22, 24, 26) als Versteifungselemente ausgebildet sind.

5. Hubdach (10) nach einem der vorhergehenden Ansprüche, bei dem zwischen der Außenschale (14) und der Innenschale (16) zumindest ein Hohlraum (62, 64, 66, 68, 70, 72, 74, 76) gebildet ist, der für Einbauten nutzbar ist, insbesondere für Kabel, Lüftung und Klimatisierung, Beleuchtung, Dachhimmel, elektrische Anschlüsse, Glasdächer.

6. Hubdach (10) nach einem der vorhergehenden Ansprüche, bei dem die Innenschale (16) randseitig eine Mehrzahl von Laschen (52, 53, 54, 55, 56, 57, 58, 59, 60) aufweist, die zur Verklebung mit der Außenschale (14) ausgebildet sind.

7. Verfahren zur Herstellung eines Hubdaches (10) für ein Fahrzeug (78), insbesondere gemäß einem der vorhergehenden Ansprüche, bei dem eine Außenschale (14) und einen Innenschale (16) aus Kunststoff hergestellt werden, die zueinander positioniert werden und miteinander verklebt werden, wobei ferner Metallteile (28, 38, 40, 42, 44, 46, 48, 50) zumindest zur Aufnahme von Scharnieren (80) und vorzugsweise von Verschlüssen (30) eingebracht werden und wobei die Metallteile (28, 38, 40, 42, 44, 46, 48, 50) bei der Herstellung von Außenschale (14) oder Innenschale (16) zumindest in eine der Außenschale (14) und der Innenschale (16) eingeschäumt oder einlaminiert werden.

8. Verfahren nach Anspruch 7, bei dem die Metallteile (28, 38, 40, 42, 44, 46, 48, 50) mit der Außenschale (14) und/oder der Innenschale (16) verklebt werden.

9. Verfahren nach Anspruch 7 oder 8, bei dem beim zwischen Außenschale (14) und Innenschale (16) zumindest ein Hohlraum (62, 64, 66, 68, 70, 72, 74, 76) erzeugt wird, der für Einbauten nutzbar ist, insbesondere für Kabel, Lüftung und Klimatisierung, Beleuchtung, Dachhimmel, elektrische Anschlüsse, Glasdächer.

## Claims

1. A lifting roof (10) for a vehicle (78), in particular for a panel van, a campervan or a caravan, having an outer shell (14) and an inner shell (16), which are adhesively bonded to one another, wherein the outer shell (14) and the inner shell (16) are made of plastic, wherein metal parts (28, 30, 32, 34, 36, 38, 40, 42, 44, 46, 48, 50) are additionally provided for receiving functional elements, said metal parts comprising at least one receptacle (28, 42) made of metal for attaching hinges (80), wherein the metal parts (28, 38, 40, 42, 44, 46, 48, 50) are foamed into or laminated into at least one of the outer shell (14) and the inner shell (16).

2. The lifting roof (10) according to claim 1, in which at least one closure (30) made of metal is provided for securing the lifting roof (10) to an installation frame.

3. The lifting roof (10) according to one of the preceding claims, in which the inner shell (16) has a plurality of elements (18, 20, 22, 24, 26) that project plastically towards the inside, preferably having at least two longitudinal struts (18, 20) running in the longitudinal direction of the roof and at least two transverse struts (22, 24, 26) running in the transverse direction of the roof.

4. The lifting roof (10) according to claim 3, in which at least some of the elements (18, 20, 22, 24, 26) are configured in the form of reinforcing elements.

5. The lifting roof (10) according to one of the preceding claims, in which at least one cavity (62, 64, 66, 68, 70, 72, 74, 76) is formed between the outer shell (14) and the inner shell (16), it being possible to use said cavity for fittings, in particular for cables, ventilation and air conditioning, lighting, roof linings, electrical connectors, glass roofs.

6. The lifting roof (10) according to one of the preceding claims, in which the periphery of the inner shell (16) has a plurality of tabs (52, 53, 54, 55, 56, 57, 58, 59, 60), which are configured to be adhesively bonded to the outer shell (14).

7. A method for producing a lifting roof (10) for a vehicle (78), in particular according to one of the preceding claims, in which an outer shell (14) and an inner shell (16) are produced from plastic, said shells being positioned in relation to one another and adhesively bonded to one another, wherein metal parts (28, 38, 40, 42, 44, 46, 48, 50) are also introduced at least for receiving hinges (80) and preferably closures (30), and wherein, during the production of the outer shell (14) or the inner shell (16), the metal parts (28, 38, 40, 42, 44, 46, 48, 50) are foamed into or laminated into at least one of the outer shell (14) and the inner shell (16).

8. The method according to claim 7, in which the metal parts (28, 38, 40, 42, 44, 46, 48, 50) are adhesively bonded to the outer shell (14) and/or the inner shell (16).

9. The method according to claim 7 or 8, in which at least one cavity (62, 64, 66, 68, 70, 72, 74, 76) is created between the outer shell (14) and inner shell (16), it being possible to use said cavity for fittings, in particular for cables, ventilation and air conditioning, lighting, roof linings, electrical connectors, glass roofs.

## Revendications

1. Toit relevable (10) pour un véhicule (78), en particulier pour un fourgon, une autocaravane ou une caravane, comportant une coque extérieure (14) et une coque intérieure (16), lesquelles sont collées l'une à l'autre, dans lequel la coque extérieure (14) et la coque intérieure (16) sont composées de matière plastique, dans lequel de plus des pièces métalliques (28, 30, 32, 34, 36, 38, 40, 42, 44, 46, 48, 50) sont prévues pour la réception d'éléments fonctionnels, lesquelles comprennent au moins un logement (28, 42) composé de métal pour la fixation de charnières (80), dans lequel les pièces métalliques (28, 38, 40, 42, 44, 46, 48, 50) sont enrobées de mousse ou stratifiées dans au moins l'une parmi la coque extérieure (14) et la coque intérieure (16).

2. Toit relevable (10) selon la revendication 1, dans lequel au moins une fermeture (30) composée de métal est prévue pour le maintien du toit relevable (10) sur un cadre de montage.

3. Toit relevable (10) selon l'une des revendications précédentes, dans lequel la coque intérieure (16) présente une pluralité d'éléments (18, 20, 22, 24, 26) en plastique faisant saillie vers le côté intérieur, de préférence comportant au moins deux entretoises longitudinales (18, 20) s'étendant dans la direction longitudinale du toit et au moins deux entretoises transversales (22, 24, 26) s'étendant dans la direction transversale du toit.

4. Toit relevable (10) selon la revendication 3, dans lequel au moins certains des éléments (18, 20, 22, 24, 26) sont réalisés sous forme d'éléments de rigidification.

5. Toit relevable (10) selon l'une des revendications précédentes, dans lequel au moins une cavité (62, 64, 66, 68, 70, 72, 74, 76) est formée entre la coque extérieure (14) et la coque intérieure (16), laquelle cavité peut être utilisée pour le montage, en particulier pour des câbles, une ventilation et une climatisation, un éclairage, un revêtement de toit, des connexions électriques, des toits en verre.

6. Toit relevable (10) selon l'une des revendications précédentes, dans lequel la coque intérieure (16) présente, côté bord, une pluralité de pattes (52, 53, 54, 55, 56, 57, 58, 59, 60) réalisées pour être collées à la coque extérieure (14).

7. Procédé de fabrication d'un toit relevable (10) pour un véhicule (78), en particulier selon l'une des revendications précédentes, dans lequel une coque extérieure (14) et une coque intérieure (16) sont fabriquées en matière plastique, lesquelles sont positionnées l'une par rapport à l'autre et collées l'une à l'autre, dans lequel en outre des pièces métalliques (28, 38, 40, 42, 44, 46, 48, 50) sont insérées au moins pour la réception de charnières (80) et de préférence de fermetures (30), et dans lequel les pièces métalliques (28, 38, 40, 42, 44, 46, 48, 50) sont enrobées de mousse ou stratifiées dans au moins l'une parmi la coque extérieure (14) et la coque intérieure (16) lors de la fabrication de la coque extérieure (14) ou de la coque intérieure (16).

8. Procédé selon la revendication 7, dans lequel les pièces métalliques (28, 38, 40, 42, 44, 46, 48, 50) sont collées à la coque extérieure (14) et/ou à la coque intérieure (16).

9. Procédé selon la revendication 7 ou 8, dans lequel au moins une cavité (62, 64, 66, 68, 70, 72, 74, 76) est créée entre la coque extérieure (14) et la coque intérieure (16), laquelle cavité peut être utilisée pour le montage, en particulier pour des câbles, une ventilation et une climatisation, un éclairage, un revêtement de toit, des connexions électriques, des toits en verre.
